# EUROPEAN PATENT APPLICATION

(11) **EP 0 672 450 A1**
(43) Date of publication of application: **20.09.1995**
(21) Application number: 94119722.0
(22) Date of filing: 14.12.1994
(51) Int. Cl.: B01J 13/00

(54) **Process for producing metal colloid and apparatus for producing the same**

(30) Priority: 17.12.1993 JP 343214/93
(71) Applicant: MICRO COLLOID CO., LTD., Hino-City, Tokyo (JP)
(72) Inventor: Sudow, Kazuo, Hino-city, Tokyo (JP)
(74) Representative: Vollmann, Heiko, Dipl.-Ing.

(57) **Abstract**

It is disclosed a process for producing metal colloid (37) by reducing a metal ion solution as a raw material solution (3) and promoting this reaction in a heating environment. Said metal ion solution is sprayed in the form of a particle mist for which particle size has been set to a desired size, and said sprayed particle mist is reduced in the atomsphere of a hydrogen flame to form a colloid. It is further disclosed an apparatus for producing metal colloid by reducing a metal ion solution as a raw material solution (3) and promoting this reaction in a heating environment. Said apparatus comprising: a raw material container (1) which contains a metal ion solution as a raw material solution (3); a compressed air supplier (5,7,9,19) which supplies compressed air for pressurizing the liquid surface of the metal ion solution in said raw material container (1); a sprayer (15) which sprays the metal ion solution in the form of particle mist set to a prescribed particle size; a heater (31) which supplies a hydrogen flame which causes the sprayed particle mist to react; and a colloid container (35) which contains the formed metal colloid. Said compressed-air supplier (19), raw material container (1) and sprayer (15) are connected in an open circuit state, and the sprayer ist arranged near the heater (31).

## Description

The present invention relates to a process for producing metal colloid and an apparatus for produing the same. The process for producing metal colloid and its production apparatus according to the present invention can be applied to any heavy metal or light metal provided it is an ionizable metal.

Heavy metal or light metal colloids have excellent oxidation-reduction ability, and have attracted attention for use as catalysts removing and purifying various types of exhaust gas. In addition, research has begun on their use as pharmaceuticals, namely "activated oxygen removers", for these characteristic catalyst reactions, and they are expected to contribute to active use in new fields such as biocatalytical science, a field that has not received much attention in conventional pharmacology.

Processes for producing metal colloid have conventionally only been applied to platinum and palladium, and can broadly be divided into the following two types. The first is an "electrical arc process" wherein electrodes are placed in a metal ion solution and a metal colloid is formed by generating electrophoresis by applying a high voltage. The second is a "combustion process" wherein a metal ion solution is applied to hydrogen gas or phosphorous and so forth to generate a reduction reaction, followed by heating by combustion to promote the reaction. Chemically, since metal in the ionic state has a shortage of electrons in comparison with solid metal, it bonds with atoms of substances other than other metals and becomes dissolved in a solution. In order to convert this into the colloidal state, it is necessary to compensate for the shortage of electrons. Therefore, in the former production process, electricity is discharged to make up for the electric charge, while in the latter production process, the electrons of hydrogen are used to make up for the electrons chemically. At this time, there are numerous conditions for forming a colloid in both of these production processes. A colloid is not formed if these conditions are not set accurately, but rather precipitation occurs in the form of a heavy metal sludge of large mass. In this metal sludge any of the properties of colloids are hardly observed.

A description of the disadvantages of each of the conventional production processes will be given below. In the case of the "electrical arc process", since positive and negative electrodes placed in a metal ion solution causes chemical changes in each of the electrodes, thus preventing simply a colloid from being formed in the solution. Namely, since large amounts of impurities are produced other than the colloid in the solution after the colloid is formed, and moreover, since the size of the impurity particles are quite different from that of the metal colloid particles, it was an extremely difficult task to extract only the colloid from the solution. In addition, due to the high electrical resistance in the solution, the more remarkably voltage decreases, the greater the distance from the electrodes is. Thus, the reaction is accelerated when a high voltage is applied to the colloid which is closer to the electrodes. Namely, the size of the colloid particles varies according to the distance from the electrodes, thus causing colloid particle size to be non-uniform. As a result, it was extremely difficult to form a pure metal colloid comprising only a single metal of uniform particle size. Thus, the electrical arc process was not practical.

In addition, in the case of the "combustion process", a colloid is formed by reduction of hydrogen and so forth, and since the reduction reaction is carried out at low temperature, a colloid is formed only on the surface of the metal ion solution. Large amounts of this colloid then adhere to the tip of a burner and get dried by the heat of the flame. Only colloid that did not adhere to the tip of a burner reaches the flame where it is burned resulting in the formation of a colloid. However, having a large- diameter particles, metal ions in the form of a liquid or fume already reduced on the surface at low temperature is large are rapidly sublimated at the moment they are plunged into the high temperature flame resulting in thermal expansion. Consequently, this process had a disadvantage of the occurrence of small explosions while giving off a cracking sound. Further, the exploded particles are not of a uniform size, but rather are of various sizes. As a result, this process also had a disadvantage in that the colloid recovery decreased remarkably and the colloid particle size could not be maintained uniformly.

Moreover, when considering the tip of the burner, since dried fine particles easily bond with other counterparts, this binding process gradually reduces the aperture of the burner tip. This ultimately resulted in the disadvantage of the outlet becoming blocked by metal particles. In the worst cases, high-pressure gas fills the burner apparatus resulting in the risk of explosion.

Moreover, as an example of another disadvantage of the combustion process, the method of setting the combustion temperature for stabilizing the metal colloid is extremely difficult. The combustion temperature changes according to the pressure of hydrogen gas and so forth for carrying out reduction, as well as the mixing volumes of the flow volume of hydrogen gas and the flow volume metal ion solution that is mixed with it. Namely, as the aperture of the burner tip becomes narrower, the total amounts of the above-descrived hydrogen gas and metal ion solution that are injected decreases. Accompanying this decrease, combustion temperature also lowers. If the amount of gas injected is increased, the temperature of the flame also increases, whereas if it is reduced, the temperature falls. The reason for controlling combustion temperature is that, depending on the type of metal, if the temperature is too high, the colloid particles end up melting. Conversely, if the combustion temperature is too low, complete reduction is not achieved, thus preventing the formation of a colloid. Although an invention was proposed (Japanese Patent Publication No. 2-43801) with respect to this disadvantage of a combustion process that considers combustion temperature, since hydrogen gas and a metal ion solution are mixed prior to combustion in this combustion process, the injection outlet of the burner still ends up becoming blocked by fine metal particles. Thus, this process also had an unavoidable disadvantage of decrease in temperature with combustion time be avoided in the same manner as the example described above. Therefore, since the burner having the blocked outlet has to be replaced, this process was unable to be used in volume production. In addition, since the combustion temperature for forming a stable colloid cannot be maintained constant at all times accompanied by the risk of explosion, problems also resulted in terms of quality. Thus, a burner had to be made available equipped with an aperture suitable for the pressure and flow volume of hydrogen gas as well as the amount mixed with the flow volume of metal ion solution whenever the type of metal colloid changed. In the invention disclosed in Japanese Patent Publication No. 2-43801, since the technique of feeding the metal ion solution to the confluent portion within the burner employs a process that is the same as the production process of a platinum colloid preparation disclosed in Japanese Patent Publication No. 28-1999, it had a disadvantage of being dependent on the reduced pressure inside the metal ion solution feed tube accompanying injection of hydrogen gas. Namely, it was impossible to individually control the flow volume of the metal ion solution and the flow volume of hydrogen gas. Accordingly, since it was only possible to control combustion temperature at two locations consisting of hydrogen gas pressure and the aperture size of each portion of the burner, the size of the colloid particles was unable to be changed arbitrarily.

It is an object of the present invention to eliminate the above-mentioned disadvantages, and to provide a process for producing metal colloid and its production apparatus that allows a high-quality metal colloid to be obtained easily, safely and at high yield.

In order to achieve the above-mentioned object, the present invention provides a process for producing metal colloid characterized in that an ionized metal as the raw material solution is sprayed in the form of a particle mist of suitable particle size, and this sprayed particle mist is reacted in the atmosphere of a hydrogen flame to form a colloid. Heavy metals such as gold, silver, copper, platinum, palladium, nickel, cobalt, iron and ruthenium are considered for the metal at this time. In addition, light metals such as aluminum, zinc, gallium, germanium, cadmium, tin, mercury and lead are also considered for the metal. In addition, the particle size of the particle mist is considered to be determined by regulation of the aperture of the spraying outlet and regulation of the feed volume of the raw material liquid at a constant pressure according to compressed air that pressurizes the liquid surface of the raw material liquid. Further, the temperature of the hydrogen flame can be considered to be able to be regulated. Moreover, the gentle stirring of a liquid dispersion medium is considered to prevent enlargement of colloid particles.

In addition, the present invention provides a production apparatus of a metal colloid comprising: a raw material container which contains ionized metal as a raw material solution; a compressed-air supplier which supplies compressed air that pressurizes the liquid surface of the raw material solution in the raw material container; a sprayer which sprays the raw material solution in the form of a particle mist of suitable particle size; a heater which supplies a hydrogen flame which causes the sprayed particle mist to react; and a colloid container which contains the resulting metal colloid; wherein the compressed-air supplier, raw material container and sprayer are successively connected in an open circuit state, and the sprayer is arranged near the heater. At this time, the sprayer can be considered to be equipped with a movable needle that regulates the aperture of the spraying outlet. In addition, the heater can be considered to be composed of a burner capable of regulating the temperature of the hydrogen flame. Further, the raw material container can be considered to be connected to the compressed-air supply portion via an air pressure control valve, and connected to the sprayer via a raw material solution control valve. Moreover, a rotatable stirrer can be considered to be provided on the bottom of the colloid container.

In the present invention, since the metal ion solution supplied in the form of a particle mist is blocked from contact with hydrogen prior to colloid formation following reaction in the hydrogen flame, a low-temperature hydrogen reduction reaction does not occur at all. If the metal ion is in a state in which it is not involved in a reduction reaction, significant mutual bonding of particles does not occur in the case of a certain extent of drying. Consequently, adherence of metal particles near the spraying outlet cannot be considered. As a result, there is no occurrence of a dangerous state due to the potential for explosion caused by blockage of the spraying outlet.

In addition, since ionized metal as the raw material solution is supplied in the form of a particle mist, it is possible to set the particle size of the mist to a desired size in advance. Since the size of the desired colloid particles is directly determined by the size of these mist particles, the particle size of the resulting colloid is uniform. As a result of the uniformity of the colloid particles and the prevention of low-temperature reduction with hydrogen, the recovery of colloid can be remarkably improved.

Moreover, since the present invention does not employ an electrical arc process and prevents low-temperature reaction with hydrogen, recovery work is easy, and the metal colloid that is recovered is of high purity.

### BRIEF DESCRIPTION OF THE DRAWINGS

Fig. 1 is a schematic front view indicating an embodiment of a metal colloid production apparatus according to the present invention.

Fig. 2 is an enlarged view of part A of Fig. 1.

Fig. 3 is a model indicating a bonding state of a metal colloid (platinum).

Fig. 4 is a model indicating a bonding state of a metal colloid (gold).

Fig. 5 is a model indicating a bonding state of a metal colloid (silver).

Fig. 6 is a model indicating a bonding state of a metal colloid (copper).

Fig. 7 is a model indicating a bonding state of a metal colloid (palladium).

Fig. 8 is a model indicating a bonding state of a metal colloid (nickel).

Fig. 9 is a model indicating a bonding state of a metal colloid (iron).

Fig. 10 is a model indicating a bonding state of a metal colloid (cobalt).

Fig. 11 is a model indicating a bonding state of a metal colloid (ruthenium).

Fig. 12 is a model indicating a bonding state of a metal colloid (rhodium).

Fig. 13 is a model indicating a bonding state of a metal colloid (aluminum).

Fig. 14 is a model indicating a bonding state of a metal colloid (gallium).

Fig. 15 is a model indicating a bonding state of a metal colloid (germanium).

Fig. 16 is a model indicating a bonding state of a metal colloid (cadmium).

Fig. 17 is a model indicating a bonding state of a metal colloid (tin).

Fig. 18 is a model indicating a bonding state of a metal colloid (manganese).

Fig. 19 is a model indicating a bonding state of a metal colloid (platinum metallic bond).

### EMBODIMENTS

The process for producing metal colloid and its production apparatus according to the present invention will be described below in detail by way of embodiments.

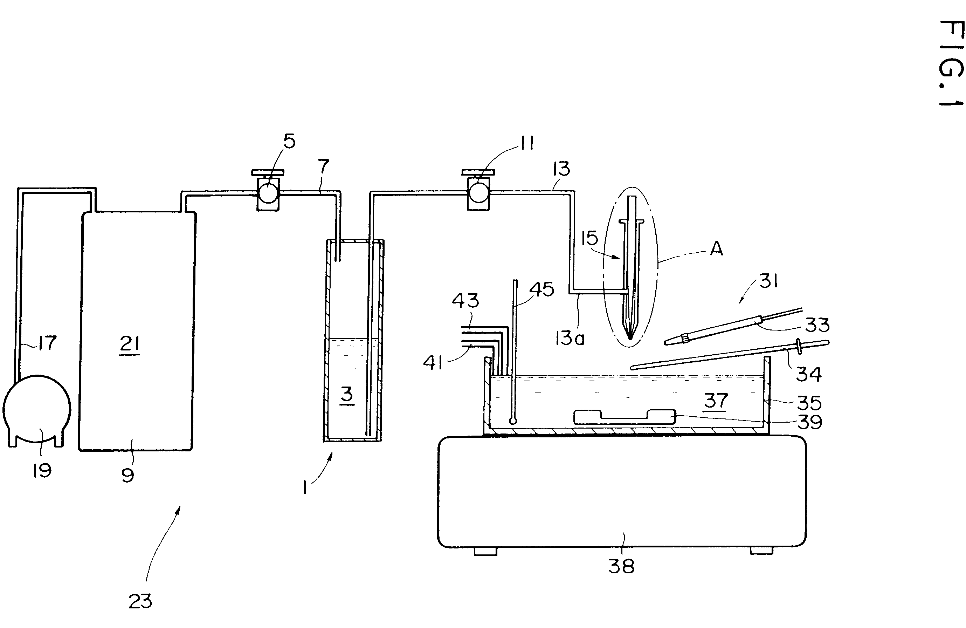

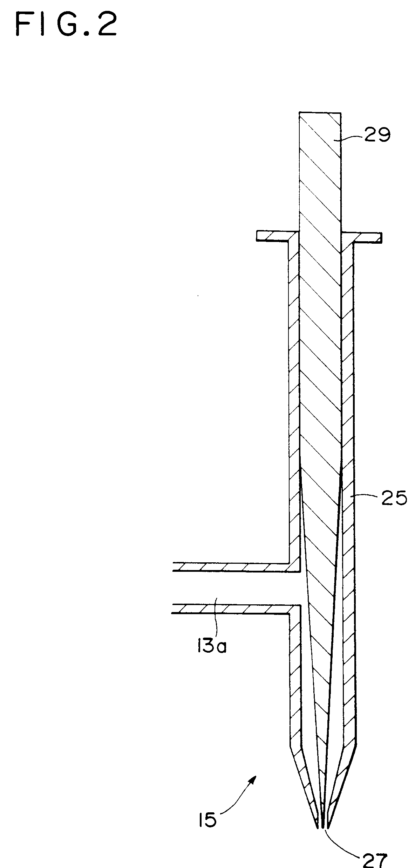

In Figs. 1 and 2, reference numeral 1 denotes a raw material containing portion composed of a hard glass tank, which contains an ionized metal solution as raw material solution 3. One side of the raw material containing portion is connected to an air tank 9 with a pipe 7 via an air pressure control valve 5 that controls the air pressure of compressed air. The other side of the raw material container is connected to a sprayer 15 by a hard glass pipe 13 via a raw material solution control valve 11 which controls the delivery volume and delivery pressure of the raw material solution. The connection state shows the state in which the circuit is open.

In the above-mentioned connections, the air pressure control valve 5 opens into the upper portion of raw material container 1, and the raw material solution control valve 11 is connected so as to be able to suck in raw material solution from the bottom of raw material container 1.

The air tank 9 is connected to a compressor 19 with a pipe 17, and contains a compressed air 21 that is compressed and produced by the compressor 19. The air tank 9, compressor 19 and air pressure control valve 5 compose a compressed air supplier 23 for supplying compressed air 21 to pressurize the liquid surface of the raw material solution in the raw material container 1.

The sprayer 15 is composed of a narrow-diameter hard-glass mist tube 25 with open ends, and a spraying outlet 27 is formed on its end. A hard glass needle 29 having a nedle-like end, is fit inside the mist tube 25 in a vertically moveable manner. The aperture of spraying outlet 27 is regulated by moving this needle 29 vertically. By regulating the aperture of spraying outlet 27 with the needle 29 and controlling the delivery volume of the raw material solution by regulation with the raw material solution control valve 11, the raw material solution, which is pressurized at a constant pressure by the compressed air 21, is sprayed from the spraying outlet 27 in the form of a particle mist of a suitable diameter. In the present invention, the mist tube 25 has a length of roughly 145 mm and inner diameter of roughly 10 mm, while the inner diameter of spraying outlet 27 is roughly 2.4 mm and the outer diameter of needle 29 is roughly 10 mm. A connecting portion 13a of the pipe 13 connected to the mist tube 25 has an outer diameter of roughly 12 mm and inner diameter of roughly 8 mm.

Reference numeral 31 is a heater which has an air mixing apparatus (not shown) on its base end, and comprises a burner 33 that can regulate the flame temperature by this mixing apparatus. This burner 33 is connected to a hydrogen tank (not shown), which supplies a hydrogen flame that causes reaction of the sprayed particle mist. The sprayer 15 is arranged near this heater 31. The flame temperature caused by the hydrogen flame is set so as to conform to the desired metal colloid. The flame temperature is measured with a thermocouple 34.

Reference numeral 35 denotes a colloid container composed of a hard-glass tank which contains a metal colloid 37 that is formed. A liquid dispersion medium is placed within the colloid container 35. The liquid dispersion medium may contain a slight amount of surface activator consisting of polyoxyethylene sorbitan monooleate (Polysorbate 80) in distilled water to compensate for interfacial tension as necessary. The colloid container 35 is provided with a stirrer 39 on its bottom which is composed of a fan that is rotated by an electromagnetic stirring apparatus 38. The stirrer 39 gently stirs the liquid dispersion medium by rotating slowly to make the density of metal colloid 37 uniform and prevent the colloid particles from becoming large unnecessarily. The colloid container 35 contains cooling and heating water pipes arranged in meandering fashion in the inside wall of the tank to maintain the liquid temperature of the liquid dispersion medium at a constant temperature or below (roughly 45 °C). In Fig. 1, only an inlet 41 and an outlet 43 are shown. Reference numeral 45 indicates a thermometer that measures the temperature inside the colloid container 35.

Incidentally, in order to prevent a decrease in purity of metal colloid 37 that is formed, it is desirable that metal materials should not be used, but rather materials such as the above-mentioned hard glass that do not react with the metal solution at those locations in contact with the ionized metal solution, should be used.

The raw material solution 3 may be a solution of a heavy metal or light metal provided it is a metal that can be ionized, examples of which include heavy metals such as gold, silver, copper, platinum, palladium, nickel, cobalt, iron and ruthenium, as well as light metals such as aluminum, zinc, gallium, germanium, cadmium, tin, mercury and lead. Since there are cases in which the mixing ratio of water and ethanol, the active ingredients of this raw material solution 3, has an influence on the temperature of the flame during combustion, blending is performed in advance so that this blending ratio conforms to the particle size of the colloid that is formed in order to keep the combustion temperature constant.

The following provides an explanation of the process by which the metal colloid 37 is produced using this raw material solution 3. The air pressure control valve 5 is operated so that the liquid surface of the raw material solution 3 is pressurized at a constant pressure (roughly 1 atm), and the raw material solution control valve 11 and needle 29 are set so that the particle mist is of the desired particle size. For example, in the case platinum is used for the raw material solution, when producing a particle mist having a large particle size of about 50 Å, the aperture of spraying outlet 27 is increased to a radium of about 0.6 mm, and the feed volume of raw material solution 3 is increased to about 100 cc/hour. In contrast, when producing a particle mist having a small particle size of about 10Å, the aperture of spraying outlet 27 is decreased to a radius of roughly 0.1 mm, while the feed volume of raw material solution 3 is reduced to about 50 cc/hour. The pressure of compressed air 21 remains constant regardless of the type of raw material solution.

The raw material solution 3 that has reached the sprayer 15 in this manner is sprayed from the spraying outlet 27 opened to a prescribed amount by the needle 29. The sprayed particle mist is immediately reduced by the hydrogen flame of heater 31 resulting in the formation of a colloid. The flame temperature produced by the hydrogen flame is set in advance corresponding to the raw material solution 3. For example, the flame temperature of the hydrogen flame in the case of forming a platinum colloid having a small particle size of about 10-15 Å is about 540 °C.

Impurities in the metal colloid formed in this manner are removed by a filter paper, after which the resulting metal colloid is stored in the colloid container 35. The metal colloid 37 contained in the colloid container 35 is adjusted for pH, salinity and so forth, so that it is stored at a pH of about 7.2 to 7.8. It may also be stirred slowly as necessary to inhibit enlargement of particles.

The process for producing metal colloid and its production apparatus according to the present embodiment offers the following advantages. Namely, since the metal colloid 37 that is formed does not come in contact with hydrogen prior to heating, there is no occurrence whatsoever of the hydrogen reduction reaction at low temperatures. If the metal ion is in a state in which it is not involved in a reduction reaction, significant mutual bonding of particles does not occur in the case of a certain extent of drying. Consequently, adherence of metal particles near the spraying outlet cannot be considered. As a result, there is no occurrence of a dangerous state due to the potential for explosion caused by blockage of spraying outlet 27.

Further, since ionized metal as the raw material solution is supplied in the form of a particle mist, it is possible to set the particle size of the mist to a desired size in advance. Since the size of the desired colloid particles is directly determined by the size of these mist particles, the particle size of the resulting colloid becomes uniform. As a result of above-described uniformity of the colloid particles and the prevention of low-temperature reduction with hydrogen, the recovery of colloid can be remarkably improved. Moreover, since the present invention does not employ an electrical arc process and prevents low-temperature reaction with hydrogen, recovery operation can be easily carried out, and the metal colloid that is recovered is of high purity.

Moreover, since the size of the colloid particles can be controlled by controlling the particle size of the particle mist, and the particle size of the particle mist can be made to be extremely fine, it is possible to produce a metal colloid in the form of fine particles, which was not possible with the conventional combustion process.

Next, since the particle size of the particle mist can be set arbitrarily by moving the needle 29 up and down in Fig. 2, the apparatus can be used for general applications.

In addition, although processes for producing metal colloid of the prior art were only able to be applied to platinum or palladium, and could not be applied to metals in general, according to the present invention, this process can be applied to both heavy metals such as gold, silver, copper, platinum, palladium, nickel, cobalt, iron and ruthenium, and light metals such as aluminum, zinc, gallium, germanium, cadmium, tin, mercury and lead, provided they are ionizable metals.

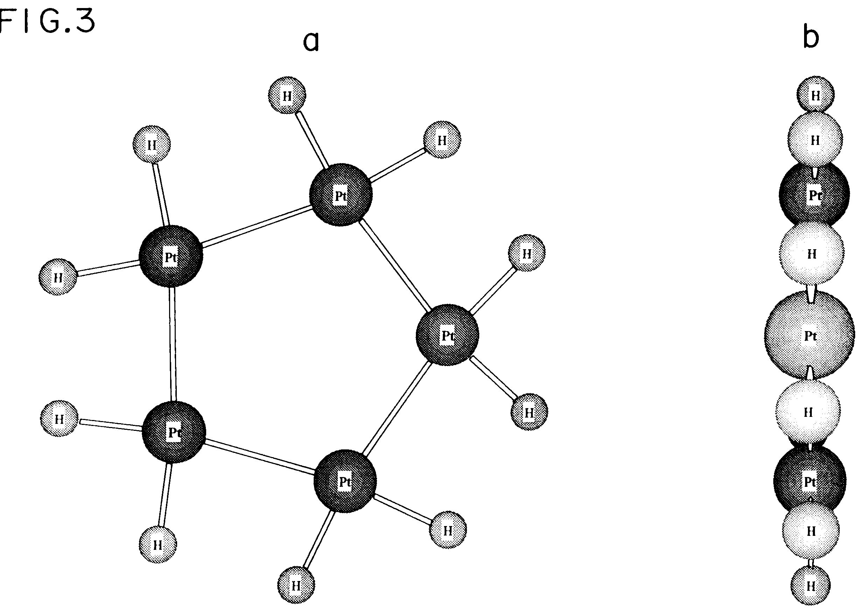

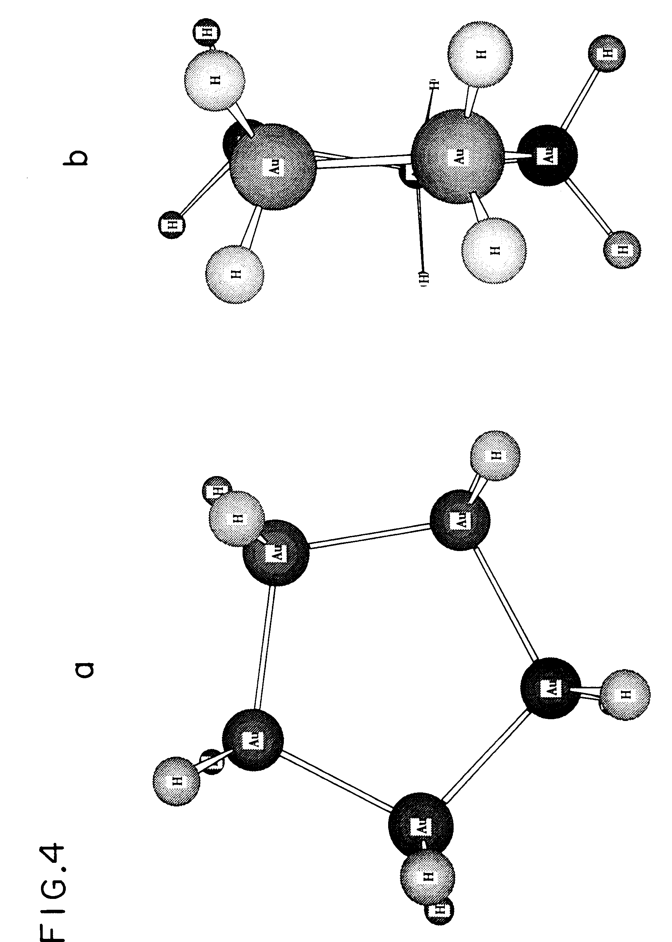

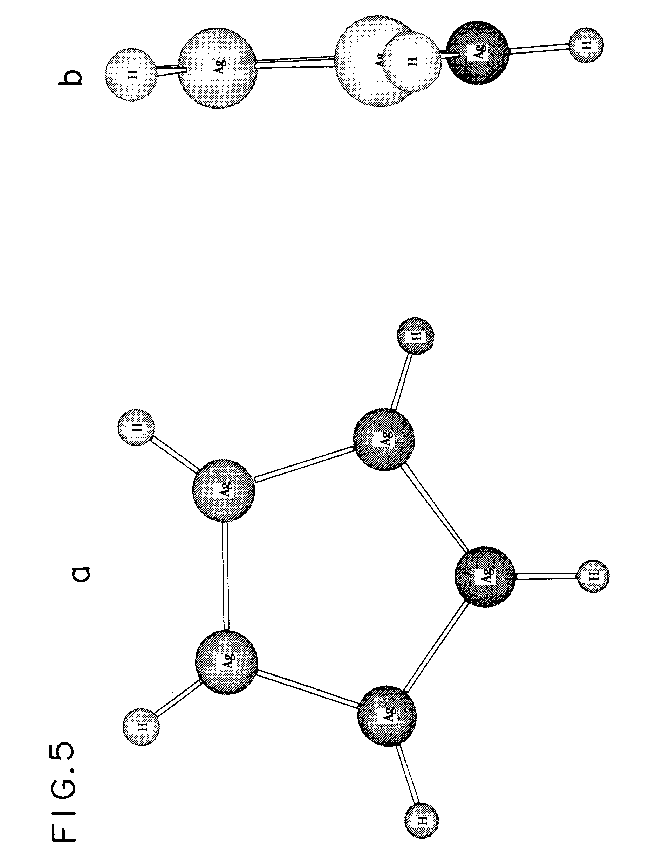

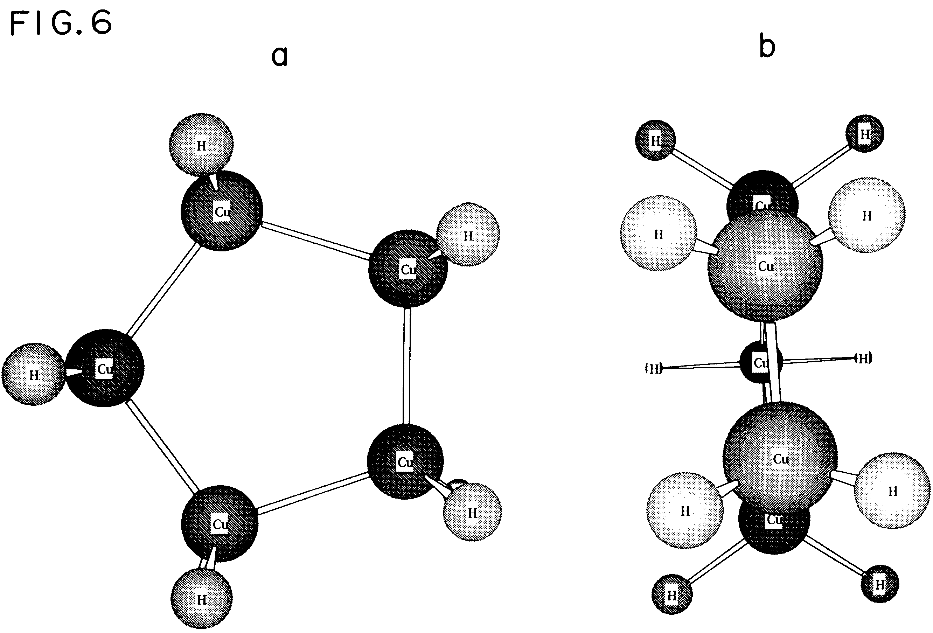

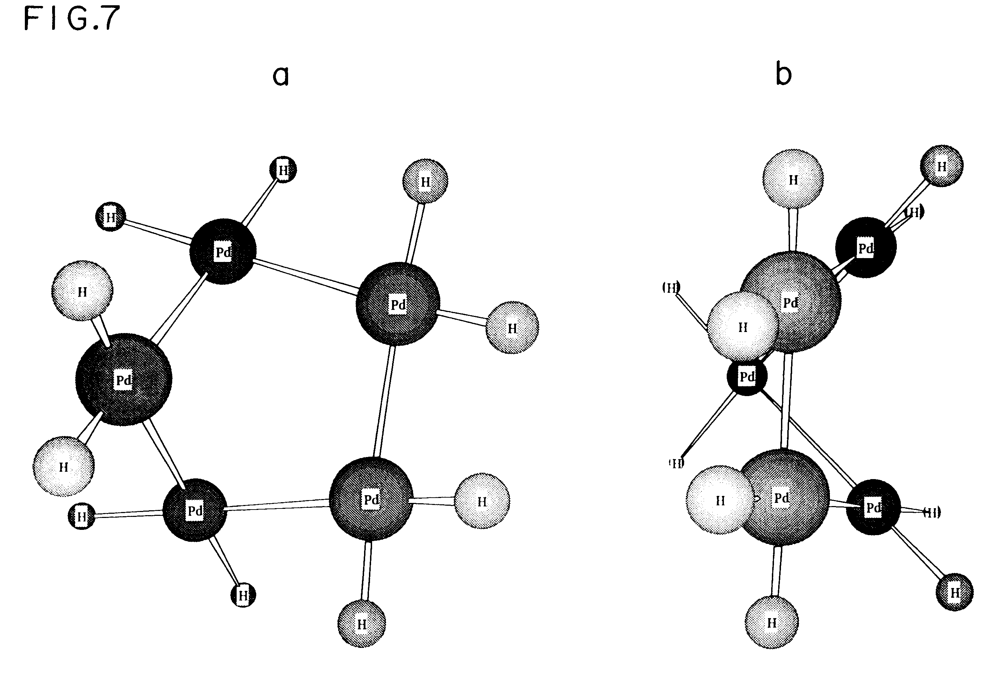

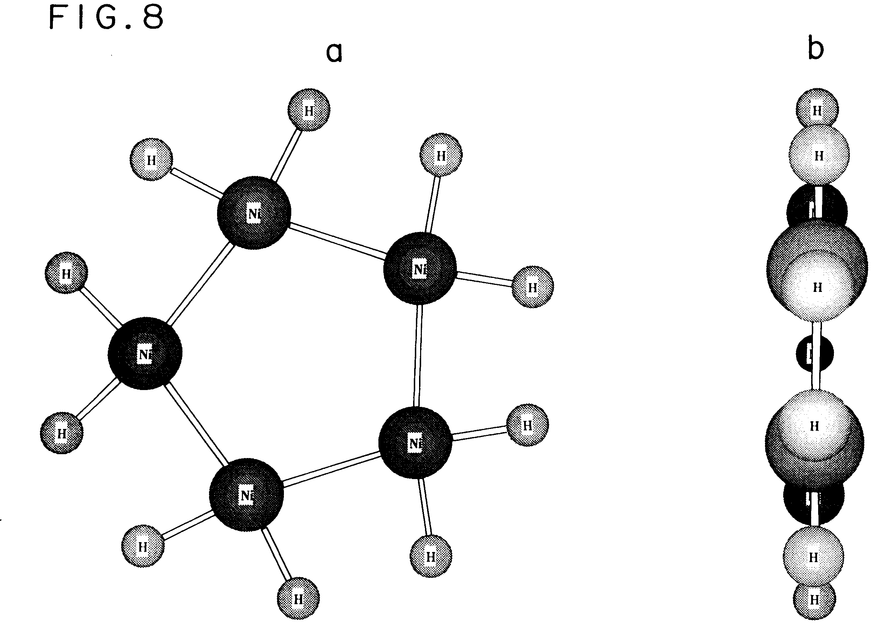

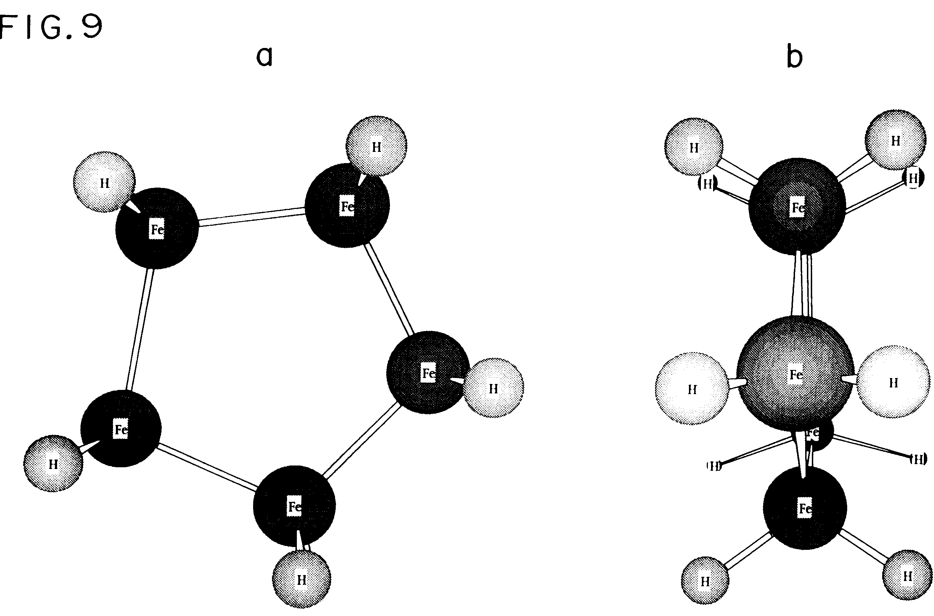

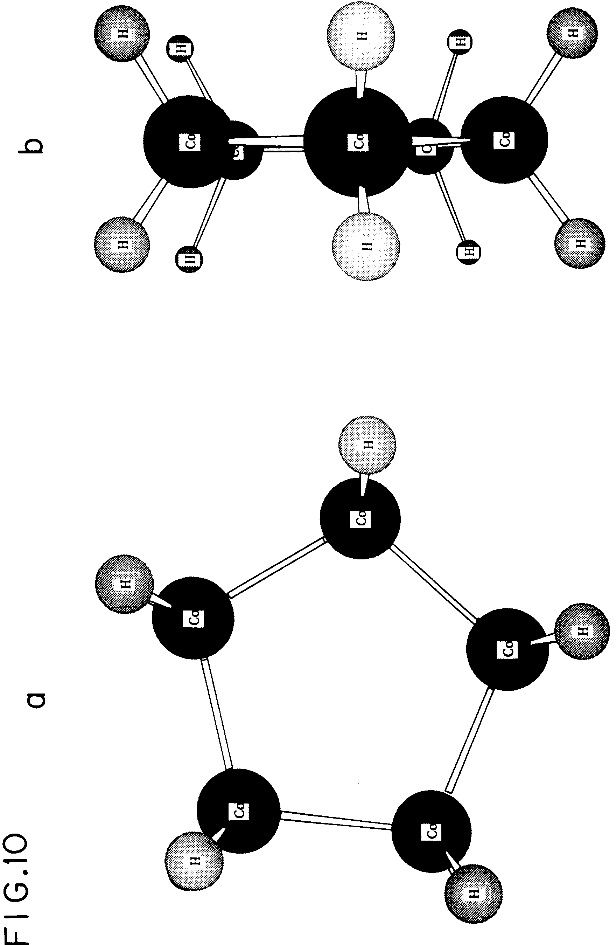

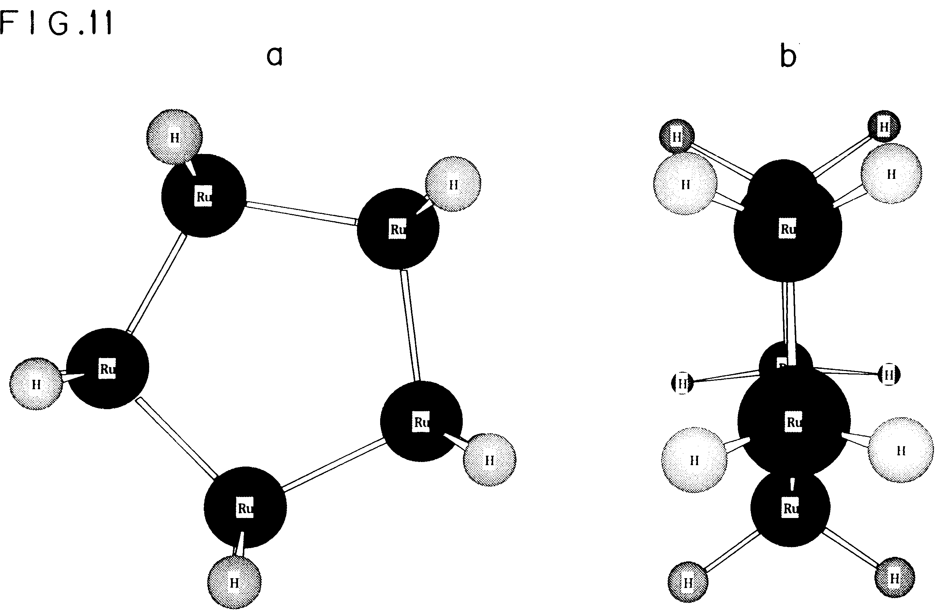

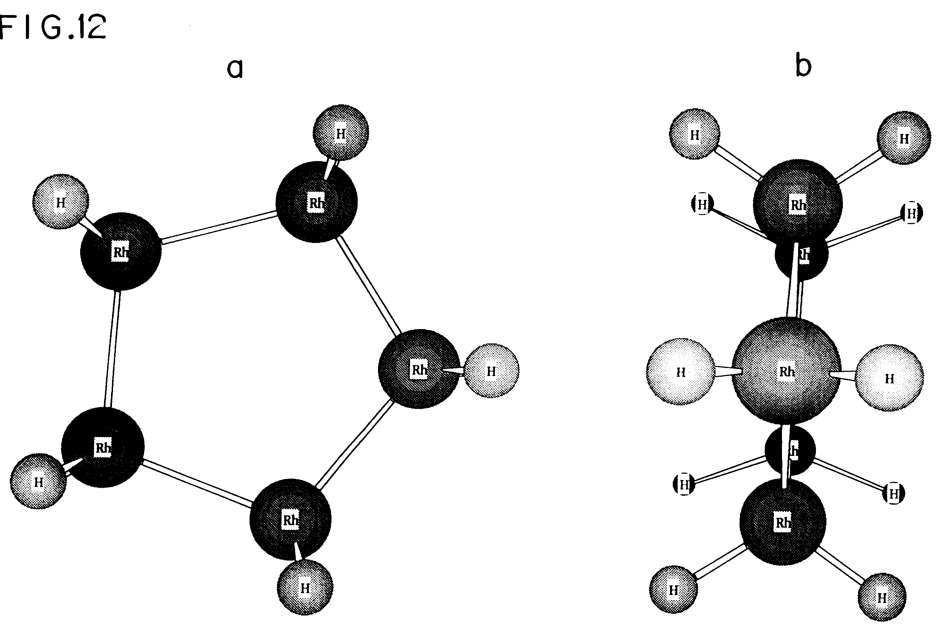

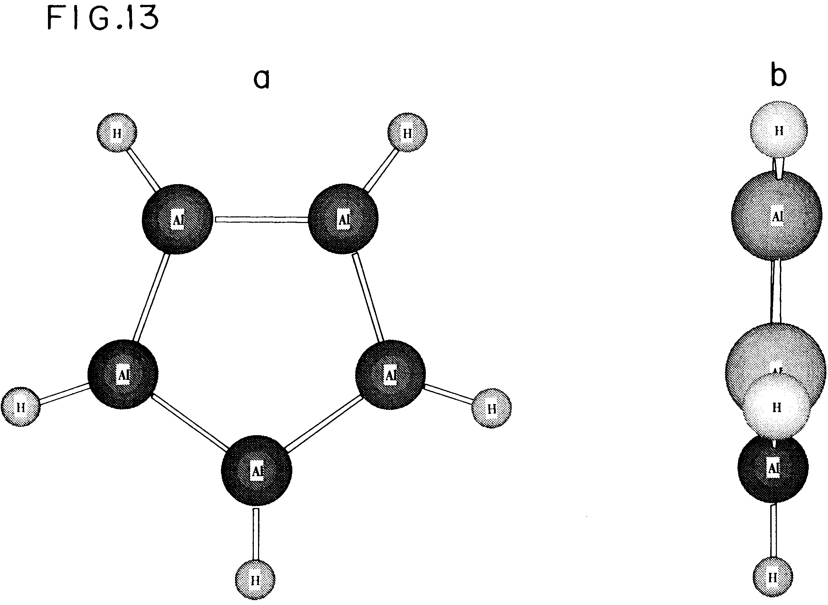

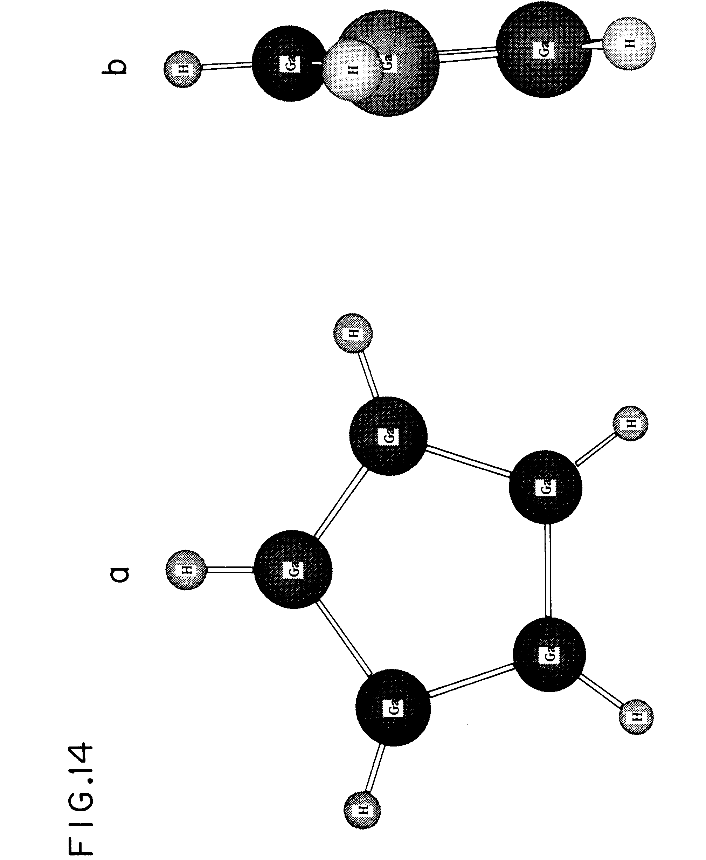

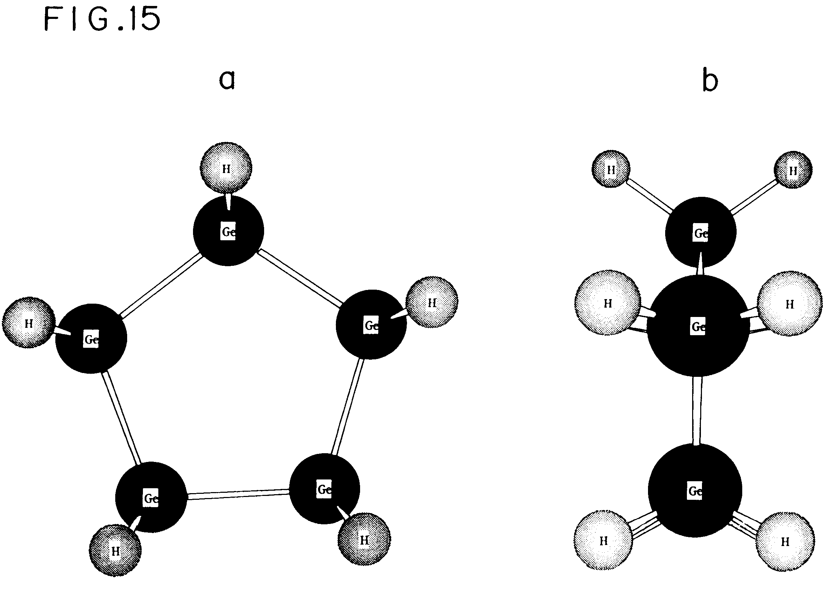

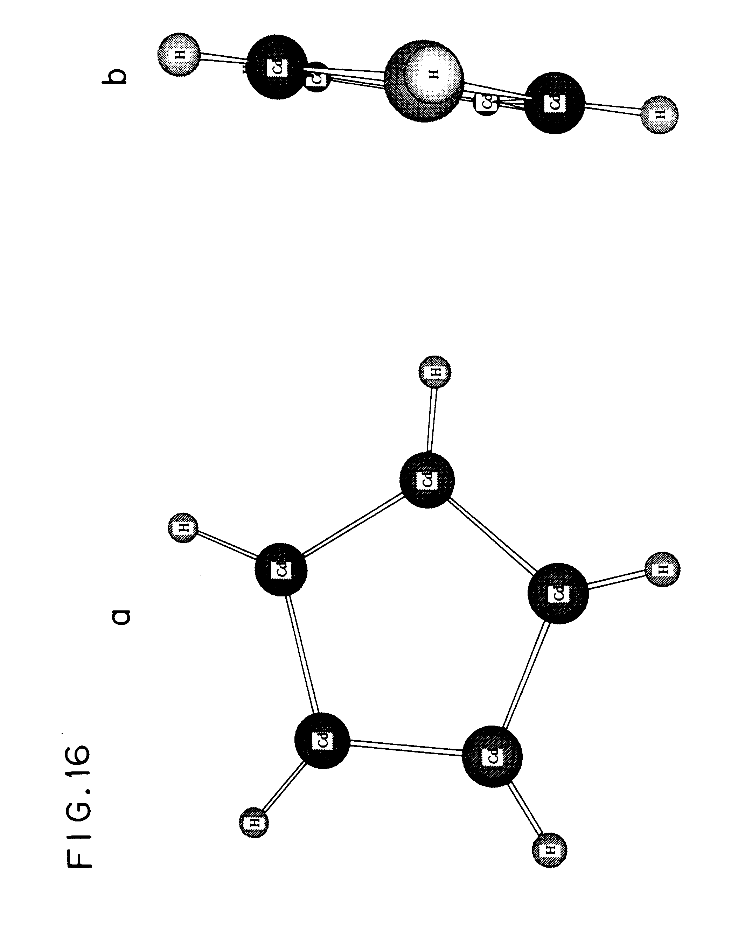

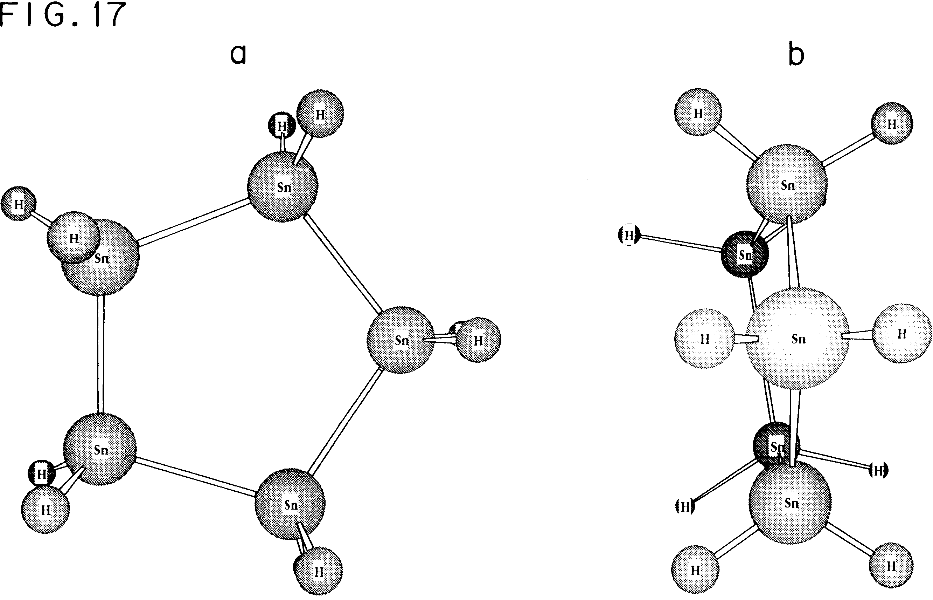

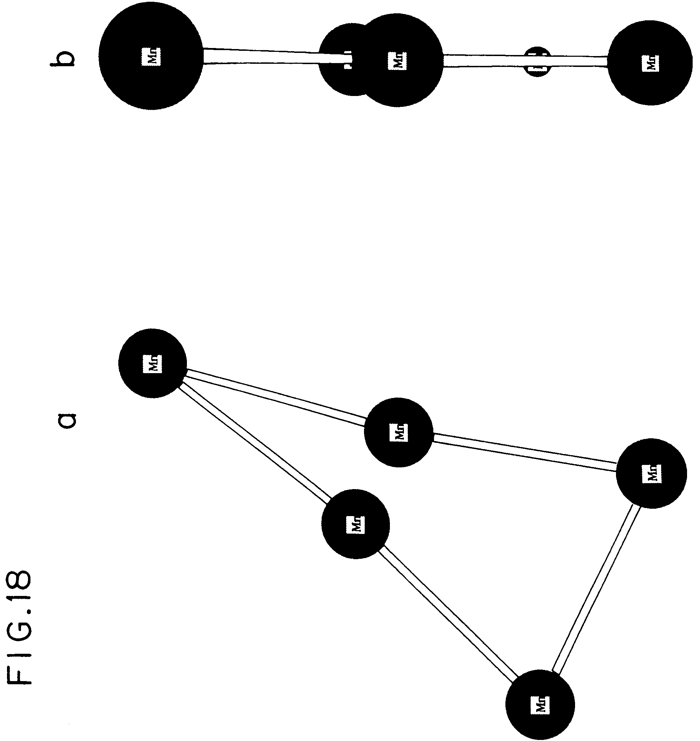

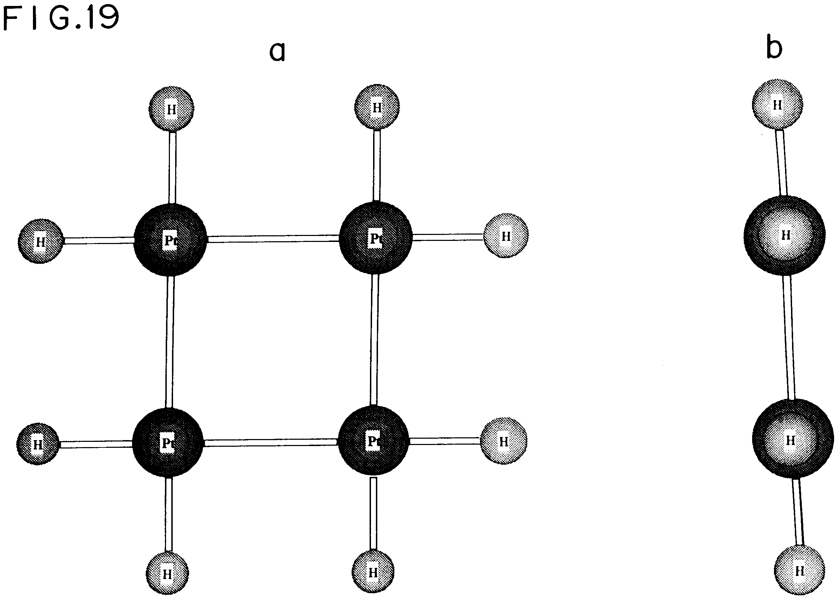

This point will be described below in more detail with reference to Figs. 3 through 19. Each figure shows a model that illustrates the manner in which atoms bond as a result of computer simulation of the movement of atomic energy. The part a of each figure shows the front view, while the part b shows the side view. Although the atoms were dispersed prior to the start of simulation in all cases, when a simulation of the movement of intermolecular energy was also performed, the bonding states of the atoms in Figs. 4 through 17 demonstrated a pentagonal shape for the colloid state in the same manner as the platinum colloid shown in Fig. 3. Moreover, this pentagonal unstable bonding is extremely similar with respect to the distance between each metal atom being large resulting in considerable separation. The size of the pentagon was also extremely similar in each case. Based on these findings, the present invention can be applicable to any of the above-mentioned heavy metals and light metals. It should be noted that this is particularly clear when the above-mentioned metals are compared with the case of manganese (Fig. 18) and the case of metallic bonding of platinum (Fig. 19). As can be seen in these two figures, the above-mentioned pentagonal bonding does not occur.

The hydrogen flame temperatures for gold, silver, copper, palladium, iron and aluminum in the above-mentioned case are shown in Table 1. The particle size of the metal colloid formed in these cases is about 10-15 Å.

**[Table 1]**

| Raw Material Solution | Hydrogen Flame Temperature |
|---|---|
| Gold | about 420°C |
| Silver | about 400°C |
| Copper | about 360°C |
| Palladium | about 480°C |
| Iron | about 670°C |
| Aluminium | about 300°C |

The process for producing metal colloid and its production apparatus according to the present invention is not limited to the above-mentioned embodiment. For example, the heavy metal or light metal used for the raw material solution is not limited to the above-mentioned metals, but may be any ionizable metal.

The spraying outlet may be regulated by employing a threaded needle. In addition, a needle is not necessarily required provided the aperture of the spraying outlet can be suitably adjusted.

Moreover, there are no restrictions on the shape and structure of the stirrer so long as enlargement of colloid particles can be prevented.

## Claims

1. A process for producing metal colloid by reducing a metal ion solution as a raw material solution and promoting this reaction in a heating environment, wherein said metal ion solution is sprayed in the form of a particle mist for which particle size has been set to a desired size, and said sprayed particle mist is reduced in the atmosphere of a hydrogen flame to form a colloid.

2. The process for producing metal colloid according to Claim 1 wherein the particle size of a particle mist is determined by regulating the aperture of a spraying outlet and regulating the feed volume of a metal ion solution under constant pressure applied by compressed air that pressurizes the liquid surface of said metal ion solution.

3. The process for producing metal colloid according to any of Claims 1 and 2 wherein the temperature of the hydrogen flame can be regulated.

4. The process for producing metal colloid according to any of Claims 1 to 3 wherein a liquid dispersion medium is gently stirred to prevent enlargement of colloid particles.

5. The process for producing metal colloid according to any of Claims 1 to 4 wherein the metal of the metal ion solution is any of the heavy metals included in the following group: gold, silver, copper, platinum, palladium, nickel, cobalt, iron and ruthenium.

6. The process for producing metal colloid according to any of Claims 1 to 4 wherein the metal of the metal ion solution is any of the light metals included in the following group: aluminum, zinc, gallium, germanium, cadmium, tin, mercury and lead.

7. An apparatus for producing metal colloid by reducing a metal ion solution as a raw material solution and promoting this reaction in a heating environment, said apparatus comprising: a raw material container which contains a metal ion solution as a raw material solution; a compressed air supplier which supplies compressed air for pressurizing the liquid surface of the metal ion solution in said raw material container; a sprayer which sprays the metal ion solution in the form of a particle mist set to a prescribed particle size; a heater which supplies a hydrogen flame which causes the sprayed particle mist to react; and a colloid container which contains the formed metal colloid; wherein said compressed-air supplier, raw material container and sprayer are connected in an open circuit state, and the sprayer is arranged near the heater.

8. The apparatus for producing metal colloid according to Claim 7 wherein the sprayer is equipped with a movable needle that regulates the aperture size of a spraying outlet.

9. The apparatus for producing metal colloid according to any of Claims 7 and 8 wherein the heater compzises a burner capable of regulating the temperature of the hydrogen flame.

10. The apparatus for producing metal colloid according to any of Claims 7 to 9 wherein the raw material container is connected to the compressed-air supplier via an air pressure control valve, and connected to the sprayer via a solution control valve.

11. The apparatus for producing metal colloid according to any of Claims 7 to 10 wherein the colloid container is equipped with a rotatable stirrer on its bottom.
